(19) **Europäisches Patentamt / European Patent Office / Office européen des brevets**

(11) **EP 3 073 441 B1**

(12) # FASCICULE DE BREVET EUROPEEN

(45) Date de publication et mention de la délivrance du brevet:
**10.07.2019 Bulletin 2019/28**

(51) Int Cl.:
*G06T 7/514* (2017.01)   *G06T 7/521* (2017.01)
*G06T 7/593* (2017.01)   *G06T 5/00* (2006.01)

(21) Numéro de dépôt: **16161574.5**

(22) Date de dépôt: **22.03.2016**

(54) **PROCÉDÉ DE CORRECTION D'UNE IMAGE D'AU MOINS UN OBJET PRÉSENTÉ À DISTANCE DEVANT UN IMAGEUR ET ÉCLAIRÉ PAR UN SYSTÈME D'ÉCLAIRAGE ET SYSTÈME DE PRISE DE VUES POUR LA MISE EN OEUVRE DUDIT PROCÉDÉ**

VERFAHREN ZUR KORREKTUR EINES BILDES MINDESTENS EINES OBJEKTS, DAS VOR EINEM BILDANZEIGEGERÄT IN DER FERNE DARGESTELLT UND VON EINEM BELEUCHTUNGSSYSTEM BELEUCHTET WIRD, UND BILDAUFNAHMESYSTEM FÜR DIE UMSETZUNG DIESES VERFAHRENS

METHOD FOR CORRECTING AN IMAGE OF AT LEAST ONE OBJECT PRESENTED REMOTELY TO AN IMAGER AND ILLUMINATED BY AN ILLUMINATION SYSTEM AND CAMERA SYSTEM FOR CARRYING OUT SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.03.2015 FR 1552495**

(43) Date de publication de la demande:
**28.09.2016 Bulletin 2016/39**

(73) Titulaire: **Idemia Identity & Security France**
**92400 Courbevoie (FR)**

(72) Inventeurs:
• **ROUH, Alain**
**92445 ISSY LES MOULINEAUX (FR)**
• **BEAUDET, Jean**
**92445 ISSY LES MOULINEAUX (FR)**
• **DURA, Jeremy**
**92445 ISSY LES MOULINEAUX (FR)**
• **ROSTAING, Laurent**
**92445 ISSY LES MOULINEAUX (FR)**

(74) Mandataire: **Cabinet Le Guen Maillet**
**3, impasse de la Vigie**
**CS 71840**
**35418 Saint-Malo Cedex (FR)**

(56) Documents cités:
WO-A1-2014/187917   JP-A- 2002 015 311
US-A1- 2005 008 199   US-A1- 2011 182 520
US-A1- 2014 055 570

EP 3 073 441 B1

**EP 3 073 441 B1**

**Description**

La présente invention concerne un procédé de correction d'une image d'au moins un objet présenté à distance devant un imageur et éclairé par un système d'éclairage ainsi qu'un système de prise de vues pour la mise en oeuvre dudit procédé.

Des systèmes de prise de vues intégrant un système d'éclairage de la scène à prendre sont connus et on peut citer, à titre d'exemple, des systèmes de prise de vues biométriques dans lesquels l'image d'un visage, d'un iris, d'une empreinte digitale d'une personne est utilisée à des fins de reconnaissance, des systèmes de prise de vues de documents, tels que des documents d'identité, des justificatifs de domicile, des tickets de jeux, etc., dans lesquels l'image du document ou une partie de celle-ci est utilisée à des fins de reconnaissance de l'identité du porteur dudit document, etc.

De tels systèmes sont décrits par exemple par:

JP2002015311 qui concerne une méthode pour modifier la lumière sur le visage d'une personne dans une image prise par une caméra afin de supprimer d'éventuelles ombres qui pourraient s'avérer gênantes pour un traitement d'authentification d'une personne. Ainsi, l'authentification peut être faite même en cas de changement d'éclairage.

Un autre exemple est US2011182520 qui concerne une méthode et un système permettant à un utilisateur de déterminer le type et l'emplacement d'une ou plusieurs sources de lumière qui éclairent un objet d'une image capturée 2D. Une fois le type et l'emplacement déterminés le système est configuré pour corriger l'image 2D dans les zones dites spéculaires.

Dans l'état de la technique, on connaît également un système de prise de vues d'un document plan qui est constitué d'un scanner à plat dont le fonctionnement est le suivant. Le document en question est posé à plat sur une vitre du scanner à une position connue déterminée par celle-ci et est uniformément éclairé au moyen d'une source de lumière appropriée. Un imageur reçoit la lumière de la source de lumière qui est réfléchie sur le document et délivre des signaux d'image correspondant, pour chaque pixel de l'image, à l'intensité de la lumière réfléchie. La source de lumière et l'imageur sont par exemple montés sur une barrette qui balaie le document de manière à en obtenir une image complète du document. La source de lumière étant très proche du document, l'éclairage du document est uniforme sur toute la surface du document.

De même, l'imageur étant très proche du document, l'intensité lumineuse qu'il reçoit de celui-ci correspond à l'intensité lumineuse réfléchie par lui. Ainsi, du fait que la source de lumière éclaire le document d'une lumière uniforme en intensité sur la surface du document, la lumière qui est reçue par l'imageur est uniquement représentative de la manière dont elle est réfléchie sur le document. Ainsi, une surface peu réfléchissante, apparaissant donc plutôt noire sur l'objet, réfléchit peu de lumière et les pixels correspondant dans l'image délivrée par l'imageur sont des pixels "sombres". A l'inverse, une surface réfléchissante, apparaissant donc blanche sur l'objet, réfléchit plus de lumière et les pixels correspondants dans l'image délivrée par l'imageur sont des pixels "clairs".

L'homogénéité d'éclairage de documents peut être notamment corrigée par calibration du fait, notamment, que leur position est connue et ne dépend pas du document considéré.

Un système de prise de vues d'au moins un objet selon la présente invention est du type qui comprend un imageur et un système d'éclairage constitué d'au moins une source de lumière mais, contrairement à l'exemple du scanner de document cité ci-dessus, la position du ou de chaque objet en question n'est pas prédéterminée. Cet objet est présenté à distance de l'imageur et de la ou des sources de lumière du système d'éclairage et peut ainsi prendre toute position possible par rapport à l'un et à l'autre, éventuellement en étant déformé. Par exemple, si l'objet en question est un document plan, tel qu'une carte d'identité, il peut être présenté à distance devant l'imageur et la source de lumière, de biais, incliné et légèrement gondolé. De plus, cette position de l'objet est changeante d'une prise de vue à une autre. Il en est de même d'un visage, d'un iris, d'une empreinte digitale d'une personne passant devant un système de prise de vues biométriques.

De ce fait, l'éclairage de l'objet par le système d'éclairage et la capture des rayons réfléchis sur l'objet par l'imageur dépendent de la position de l'objet au moment de la prise de vue. Il peut en résulter, pour les opérations ultérieures de traitement de l'image prise par le système de prise de vues, des difficultés du fait de réflexions non-souhaitées, de manque de contraste dans certaines zones, etc.

Cette non-uniformité de l'éclairage de l'objet résulte du fait que la lumière le frappant dépend de la répartition spatiale de l'intensité de lumière conférée par le système d'éclairage. Cette répartition spatiale se présente par exemple sous la forme d'un lobe de la ou chaque source de lumière constituant ledit système d'éclairage avec une intensité lumineuse maximale dans l'axe principal de la source et une intensité lumineuse affaiblie au fur et à mesure que l'on s'écarte dudit axe principal. De plus, l'intensité lumineuse qui frappe un point de l'objet décroît avec le carré de la distance qui le sépare de la source de lumière. Ainsi, plus ce point est éloigné d'une source de lumière et moins l'intensité lumineuse qui frappe ce point est importante. L'intensité de la lumière qui est réfléchie sur l'objet dépend non-seulement des caractéristiques de réflexion de la lumière en fonction de la surface de l'objet mais aussi de l'inclinaison de cette surface par rapport à l'axe de la source de lumière. Enfin, l'intensité lumineuse reçue par l'imageur varie en fonction du carré de la distance qui sépare l'imageur de chaque point de l'objet.

Ces phénomènes amènent à considérer que la lumière qui est reçue dans ces conditions par un objet n'est pas uniforme sur toute sa surface et que la quantité de lumière reçue par l'imageur dépend non seulement du pouvoir de réflexion de cette surface mais aussi de la position de l'objet par rapport à la source de lumière et à l'imageur. Lorsque les signaux d'image délivrés par l'imageur servent à un traitement d'image ultérieur, comme par exemple, la reconnaissance de caractères sur l'objet, cette non-uniformité peut entraîner des problèmes du fait d'un contraste insuffisant de certaines parties de l'image prise de l'objet par l'imageur.

De manière générale, du fait que l'éclairage d'un objet par le système d'éclairage et la capture des rayons réfléchis sur l'objet par l'imageur dépendent de la position de cet objet au moment de la prise de vue, l'image prise par l'imageur peut ne pas être de qualité suffisante pour un traitement ultérieur.

Il y a donc, dans ces conditions, un besoin d'un procédé de correction d'image prise par un imageur qui rende une image corrigée voisine d'une image dudit objet prise dans des conditions de lumière uniforme.

Le but de la présente invention est donc de proposer un tel procédé de correction d'image prise par un système de prise de vues d'un objet présenté à distance qui ne présente pas les inconvénients présentés ci-dessus.

Pour ce faire, la présente invention concerne un procédé de correction d'une image d'un objet présenté à distance prise par un imageur, ledit objet étant éclairé au moyen d'un système d'éclairage. Le procédé qui décrit l'invention est défini par la revendication 1.

D'autres caractéristiques avantageuses sont décrites par les revendications dépendantes.

La présente invention concerne également un système de prise d'une image d'un objet présenté à distance devant un imageur, ledit objet étant éclairé au moyen d'un système d'éclairage. Ledit système est décrit par la revendication 5.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 est un schéma synoptique d'un système de prise de vues selon un premier mode de réalisation de l'invention,
- la Fig. 2 est un schéma illustrant la simulation d'éclairage qui est mise en oeuvre par l'invention,
- la Fig. 3 est un schéma synoptique d'un système de prise de vues selon un second mode de réalisation de l'invention,
- la Fig. 4 est un diagramme montrant les différentes étapes mises en oeuvre par un procédé de prise d'une image d'un objet selon la présente invention, et
- la Fig. 5 est un schéma synoptique d'un système informatique susceptible de mettre en oeuvre un procédé de prise d'une image selon la présente invention.

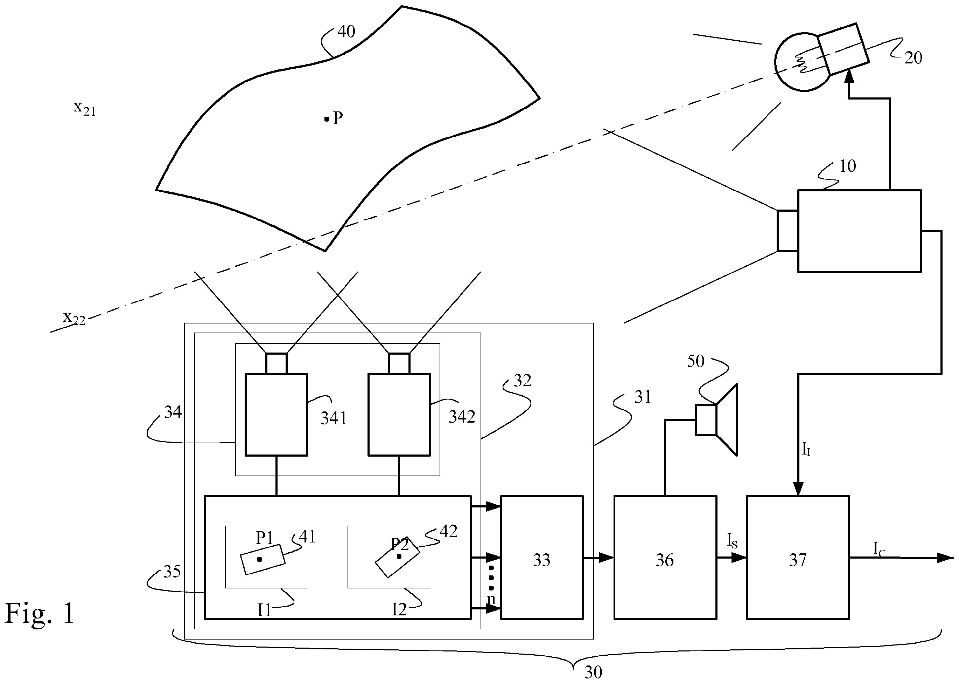

Le système de prise de vues représenté à la Fig. 1 est constitué d'un imageur 10 qui est prévu pour délivrer des signaux d'image $I_I$, d'un système d'éclairage constitué d'au moins une source de lumière (en l'occurrence, une seule source de lumière 20 représentée schématiquement sous la forme d'une ampoule formant source de lumière) ainsi qu'une unité de traitement 30.

L'imageur 10 peut être prévu pour prendre une image photographique ou une suite d'images telle qu'une séquence vidéo. Dans ce cas, l'image $I_I$ dont il est question dans la présente description est chaque image de la séquence vidéo.

Selon l'invention, l'unité de traitement 30 comporte une unité d'estimation 31 pour estimer un modèle 3D d'un objet 40 tel qu'il se trouve au temps T0 de la prise d'image effectuée par l'imageur 10.

Dans le mode de réalisation représenté, l'unité d'estimation 31 comporte une unité de modélisation 32 pour déterminer un modèle 3D de l'objet 40. Cette unité de modélisation 32 comprend, d'une part, un système de prise de vues 3D 34 et, d'autre part, une unité de traitement 35 prévue pour effectuer la modélisation 3D proprement dite.

Le système de prise de vues 3D peut être de tout type connu de l'homme du métier, comme un système à lumière structurée ou une caméra à temps de vol. Dans le mode de réalisation qui fait l'objet de la présente description et qui est donné à titre d'illustration, le système de prise de vues 3D est constitué d'un système stéréoscopique comprenant deux caméras 341 et 342.

Pour illustrer l'invention, à la Fig. 1, devant les caméras 341 et 342, se trouve un unique objet 40 plan légèrement gondolé. Cet objet 40 est présenté à distance devant l'imageur 10 et devant un système d'éclairage, ici constitué à titre exemplatif d'une seule source de lumière 20 (c'est-à-dire présenté à distance devant l'imageur 10 et le système d'éclairage 20 sans que cet objet 40 repose sur une surface de référence, telle une vitre de scanner, et sans que sa position soit préalablement connue). Il est également présenté devant le système de prise de vues 3D 34, ici les caméras 341 et 342. Un point P particulier de cet objet est aussi représenté.

La présente invention est également pertinente si plusieurs objets 40 sont présentés devant le système de prise de vues 3D.

L'unité de traitement 35 est prévue pour recevoir les signaux d'images du système de prise de vues 3D 34, par exemple les caméras 341 et 342 et, à la détection d'un objet 40 devant elles (détection opérée soit par l'unité de traitement 30, soit par tout moyen de détection approprié) détermine, à partir de ces signaux d'images, un modèle 3D de l'objet 40 devant lui.

On explicite ci-après le fonctionnement de l'unité de traitement 35 dans le cas où le système de prise de vues 3D 34 est à deux caméras 341 et 342. Ces caméras 341 et 342 sont calibrées ce qui signifie que leurs paramètres intrinsèques sont connus et utilisés par l'unité de traitement 35. Ces paramètres intrinsèques sont par exemple donnés par les coefficients d'une matrice K. De même, les paramètres extrinsèques de l'une des caméras, par exemple la caméra 342, par rapport à l'autre de la paire, sont déterminés et utilisés par l'unité de traitement 35.

On a représenté, dans la boîte de l'unité de traitement 35, l'image I1 délivrée par la caméra 341 et l'image I2 délivrée par la caméra 342. On peut y voir respectivement les images 41 et 42 de l'objet 40 et les images P1 et P2 d'un point P quelconque de l'objet 40.

Les images respectivement ainsi formées d'un point P de coordonnées (x, y, z) sont respectivement des points P1 et P2 de coordonnées (u1, v1) et (u2, v2) dans les images respectives I1 et I2 qui vérifient les équations suivantes :

$$\lambda_1 \begin{vmatrix} P_1 \\ 1 \end{vmatrix} = K \begin{bmatrix} I_3 & 0 \end{bmatrix} \begin{vmatrix} P \\ 1 \end{vmatrix} \tag{1}$$

et

$$\lambda_2 \begin{vmatrix} P_2 \\ 1 \end{vmatrix} = K' \begin{bmatrix} R_{12} & T_{12} \end{bmatrix} \begin{vmatrix} P \\ 1 \end{vmatrix} \tag{2}$$

où la matrice $[R_{12} \ T_{12}]$ ($R_{12}$ est une matrice de rotation et $T_{12}$ est une matrice de translation) exprime les paramètres extrinsèques de la caméra 342 par rapport à la caméra 341 et $\lambda_1$ et $\lambda_2$ sont des facteurs inconnus traduisant qu'à un même point image P1, P2 correspond une infinité de points antécédents. $I_3$ est la matrice unité de dimensions 3 x 3.

L'unité de traitement 35 est prévue pour mettre en correspondance des points images P1 et P2 des images respectivement prises par les caméras 341 et 342 qui se trouvent être des points images respectifs d'un même point antécédent P. Cette mise en correspondance est connue de l'homme du métier et peut être réalisée par la méthode qui est exposée dans l'article de David G. Lowe, intitulé "Object récognition form local scale-invariant features" publié dans Proceedings of the International Conference on Computer Viston, vol 2 (1999) p1150-1157. Le document de Herbert Bay, Tinne Tuytelaars et Luc Van Gool intitulé « SURF: Speeded Up Robust Features » et publié dans 9th European Conference on Computer Vision, Graz, Autriche, 7-13 mai 2006 mentionne lui-aussi une telle méthode.

Les équations ci-dessus montrent qu'à chaque couple de points images (P1, P2) ainsi mis en correspondance, on a un système linéaire de 6 équations avec seulement 5 inconnues qui sont respectivement les deux facteurs $\lambda_1$ et $\lambda_2$ et les trois coordonnées x, y, z du même point P antécédent de ces points images P1 et P2. Il est donc possible, à partir des images fournies par les caméras 341 et 342 calibrées, de déterminer les coordonnées x, y, z de tout point P antécédent d'un couple de points appariés P1, P2 et ainsi, en considérant une pluralité de couples de points appariés (P1, P2) de déterminer un modèle 3D de l'objet 40 devant elles.

Ce qui est appelé ici un modèle 3D d'un objet est un ensemble discret de points P de coordonnées (x, y, z) qui appartiennent à l'objet réel. D'autres points qui appartiennent aussi à l'objet réel mais qui n'appartiennent pas à cet ensemble discret de points peuvent être obtenus par extrapolation de points du modèle 3D.

En complément de ce qui vient d'être dit ici, il est possible de consulter l'ouvrage de Hartley, Richard and Andrew Zisserman intitulé "Multiple View Geometry In Computer Vision", Cambridge, 2000, notamment pour l'exposé du modèle mathématique ci-dessus et de la méthode de modélisation par stéréoscopie au moyen de deux caméras calibrées.

L'unité de traitement 35 est prévue pour commander au moins une prise de vues du système de prise de vues 34 à un instant t (qui peut être l'instant T0 de prise de vues par l'imageur 10) ou à des instants successifs t0 à tn et pour établir, selon la méthode ci-dessus exposée, un modèle 3D de l'objet 40 à l'instant t correspondant. Si plusieurs prises de vues sont effectuées à des instants successifs t0 à tn (comme c'est le cas à la Fig. 1), une unité d'extrapolation 33 est en mesure d'établir le mouvement de l'objet 40 (Translation et Rotation) et d'estimer sa position au temps prédéterminé T0 de prise de vues par l'imageur 10. Cette position sera dite par la suite "Position au temps T0 de prise de vues". Ce qui est appelé "position de l'objet 40" est les coordonnées de chacun des points qui constituent le modèle 3D.

L'unité de traitement 30 comporte encore une unité de simulation 36 qui est prévue pour simuler une image prise par l'imageur 10 compte tenu de l'éclairage de l'objet 40 par la source de lumière 20. Ainsi, l'unité de simulation 36 estime la quantité de lumière issue de la source de lumière 20, puis la quantité de lumière réfléchie par ledit objet en direction de l'imageur 10 et enfin la quantité de lumière reçue par l'imageur 10. Pour ce faire, cette simulation d'image utilise le modèle 3D qui a été précédemment déterminé par l'unité d'estimation 31, un modèle d'éclairage du système d'éclairage 20, un modèle de réflexion de la lumière sur un objet ainsi qu'un modèle de l'imageur 10. Il peut également utiliser divers algorithmes, tels que l'algorithme de radiosité, des algorithmes de photométrie analytique, l'algorithme de lancer de rayons (Ray-tracing), etc.

Le modèle d'éclairage définit la ou chaque source de lumière 20 du système d'éclairage, par exemple par leurs paramètres intrinsèques représentant la distribution de l'intensité de la lumière dans les différentes directions de l'espace et les caractéristiques de cette lumière (spectre, polarisation, etc.) ainsi que leurs paramètres extrinsèques (position de la source de lumière 20 considérée par rapport à l'imageur 10 et au système de prise de vues 3D 34).

Le modèle de réflexion sur un objet utilisé est par exemple un modèle Lambertien pour des réflexions parfaitement diffusantes ou un modèle de Phong pour des réflexions diffusantes ainsi que des réflexions spéculaires.

Le modèle de l'imageur peut être un modèle simplifié dit « pinhole » avec un objectif se présentant sous la forme d'un trou ou pinhole et un capteur sur lequel est formée l'image de la scène.

Le résultat de la simulation d'image opérée par l'unité de simulation 36 est une image numérique qui est dénommée dans la suite description, image simulée $I_S$.

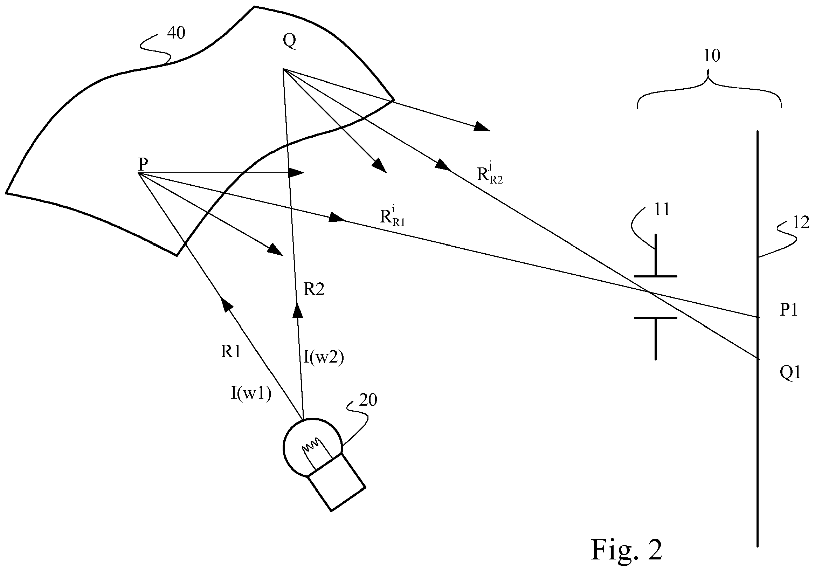

Pour illustrer un exemple d'une méthode de simulation d'image qui pourrait être mise en oeuvre par l'unité de simulation 36, on a représenté à la Fig. 2 un objet 40, un imageur 10 sous la forme d'un modèle « pinhole » avec son objectif 11 et un capteur 12, ainsi qu'un système d'éclairage constitué ici que d'une source de lumière 20. Le modèle d'éclairage définit la source de lumière 20 comme émettant des rayons dans toutes les directions selon une distribution spatiale donnée (l'intensité lumineuse émise I varie selon la direction $\omega$ du rayon considéré : $I(\omega1)$ pour le rayon R1 et $I(\omega2)$ pour le rayon R2). Pour chaque rayon émis par elle, un point d'impact sur l'objet 40 est calculé (tels que les points P et Q pour les rayons respectifs R1 et R2) selon des règles de géométrie (intersection du modèle 3D estimé de l'objet 40 avec la droite portant le rayon considéré). L'intensité lumineuse reçue à un point d'impact sur l'objet 40 dépend de l'intensité lumineuse $I(\omega)$ de la source de lumière 20 dans la direction $\omega$ considérée et de la distance qui sépare ce point de la source de lumière 20.

Il est possible de limiter ce calcul aux seuls rayons qui donnent un point d'impact sur l'objet 40 ou même aux seuls rayons qui donnent un point d'impact à l'intérieur d'une ou plusieurs zones d'intérêt de l'objet 40.

Selon le modèle de réflexion utilisé (modèle Lambertien, modèle de Phong, ou autre), à chaque point d'impact, plusieurs rayons sont réémis dans toutes les directions possibles avec des intensités variant avec ces directions. Par exemple, on n'a représenté à la Fig. 2, aux points P et Q, que trois rayons respectivement issus des rayons R1 et R2. Chacun rayon incident, s'il est capté par l'imageur 10, forme un point d'impact avec le capteur 12 et y apporte une intensité lumineuse qui est fonction non seulement de la réflexion sur l'objet mais aussi de la distance qui sépare ce point d'impact du point d'impact précédent sur l'objet.

Ainsi, il est possible de déterminer, de point en point, l'intensité lumineuse totale à chaque point du capteur 12 qui est fonction des valeurs des intensités lumineuses pour chaque rayon réfléchi sur l'objet 40 et donc chaque rayon incident issu de la source de lumière 20. Le résultat de cette simulation est une image simulée $I_S$.

L'unité de traitement 30 comporte encore une unité de correction 37 dont la fonction essentielle est de modifier au moins une caractéristique, telle que l'intensité lumineuse, de chaque point de l'image ou d'au moins une zone d'intérêt de l'image réellement prise par l'imageur en fonction de l'intensité lumineuse du point correspondant dans l'image simulée ou d'un ensemble de points voisins dudit point correspondant dans l'image simulée.

Par exemple, l'unité de correction 37 a pour fonction de corriger l'image $I_I$ (voir Fig. 1) qui est réellement prise par l'imageur 10 afin que l'image corrigée résultante $I_C$ soit représentative de l'objet 40 s'il était uniformément éclairé par la source de lumière 20 et si l'imageur 10 recevait l'intensité lumineuse directement réfléchie à chacun des points de l'objet 40 ou partie d'intérêt de l'objet 40.

Pour ce faire, plus une zone de l'image simulée $I_S$ est sombre plus la zone correspondante de l'image $I_I$ réellement prise par l'imageur 10 sera rehaussée en intensité lumineuse et, inversement, plus cette zone de l'image simulée $I_S$ sera claire, plus la zone correspondante de l'image $I_I$ réellement prise par l'imageur 10 sera foncée.

Par exemple, si un point **p** de l'image réellement prise par l'imageur 10 présente une intensité lumineuse $I_I(p)$ et si le point correspondant de l'image simulée présente une intensité lumineuse $I_S(p)$, l'intensité lumineuse $I_C(p)$ à ce point **p** dans l'image corrigée est donnée par la relation :

$$I_C(p) = I_I(p) \cdot \frac{1}{I_S(p)} = I_I(p) \cdot F(p)$$

où F(p) est le facteur de correction appliqué au point p de l'image réellement prise par l'imageur 10.

De manière générale, le facteur de correction F(p) est une fonction décroissante de l'intensité lumineuse du point dans l'image simulée dudit objet correspondant au point **p.**

Elle peut également être une fonction décroissante de l'intensité lumineuse de plusieurs points voisins du point de l'image simulée correspondant au point **p** de l'image réellement prise par l'imageur dont l'intensité est à corriger. Par exemple, dans l'équation ci-dessus, I$_S$(p) peut être la moyenne des intensités lumineuses respectives des points de l'image simulée voisins d'un point de l'image simulée correspondant au point **p** et, donc, le facteur de correction F(p) une fonction décroissante de la moyenne de ces intensités.

L'unité de simulation 36 peut déterminer des zones de l'objet dans lesquelles sont présentes des spécularités, c'est-à-dire des zones qui reflètent, sans diffusion importante, les rayons issus de la source de lumière 20, les rayons ainsi réfléchis venant frapper directement l'imageur 10. Ces zones ne sont généralement pas exploitables, notamment pour une reconnaissance de caractères, car la quantité de lumière ainsi réfléchie provoque des saturations de l'image numérique produite. Afin d'avertir l'utilisateur de modifier la position de l'objet 40 pour une nouvelle prise de vue par l'imageur 10, il est possible de prévoir une alarme 50 qui est alors déclenchée lorsque de telles spécularités apparaissent.

Dans un autre mode de réalisation, lorsque des spécularités sont détectées par l'unité de simulation 36, un masque est créé sur l'image I$_l$ réellement prise par l'imageur 10 afin de ne pas prendre en compte, lors du traitement ultérieur de correction d'image, les zones de l'objet 40 où ces spécularités apparaissent.

Plus généralement, la correction d'image pourra n'être appliquée qu'uniquement pour les points de l'image simulée présentant des valeurs qui sont comprises entre une valeur seuil maximale et une valeur seuil minimale. Ainsi, dans le cas où une spécularité est détectée dans l'image simulée par l'unité de simulation 36, l'image réellement prise par l'imageur 10 pourra ne pas être corrigée pour les points d'image concernés. De même, dans le cas où le niveau dans l'image simulée est trop faible, voire nul, l'image réellement prise par l'imageur 10 pourra ne pas être corrigée

De plus, un masque des points de l'image corrigée pourra être créé pour une utilisation ultérieure par des algorithmes d'analyse d'image. Un tel masque peut permettre à des algorithmes d'analyse d'image mise en oeuvre ultérieurement, par exemple pour calculer des statistiques sur l'image, de ne pas prendre en compte les points de l'image corrigée qui n'ont pas été corrigés, parce que leurs valeurs ne sont pas comprises entre lesdites deux valeurs seuils. Ces points correspondent ou à des spécularités ou à des zones de très faible intensité lumineuse (voire nulle).

Cette approche est également l'une des manières de gérer les problèmes numériques de division par zéro, mais permet surtout aux algorithmes d'analyse d'image d'avoir une information sur la fiabilité des points d'image traités.

Dans un mode de réalisation particulier, l'image simulée aura une valeur maximum de 1 pour la zone utile correspondant à l'objet considéré et en dehors de toute zone de reflet spéculaire et l'image réellement prise par l'imageur ne sera donc pas ou peu modifiée pour ses points correspondant aux parties de l'objet les plus éclairées mais ne provocant pas de reflet spéculaire (valeurs voisines de 1 de l'image simulée) et sera corrigée de manière que le niveau soit d'autant plus réhaussé pour ses autres points que l'éclairement donné par la valeur de l'image simulée aux points correspondants sera moins fort.

Dans un autre mode de réalisation, l'image simulée sera calculée à un facteur près, et la dynamique de l'image corrigée sera déterminée en fonction de la quantification de l'image corrigée souhaitée, par exemple de 0 à 255 pour une quantification sur 8 bits, et d'un critère visant à exploiter toute la dynamique des intensités possibles pour l'image corrigée.

Compte tenu, d'une part, de la précision de l'échantillonnage spatial de l'estimation du modèle 3D de l'objet d'intérêt et, d'autre part, des modèles de réflexion proposés ici qui correspondent à une hypothèse de matériau homogène, c'est-à-dire qu'ils ne rendent pas compte de variations locales de réflexion de l'objet, par exemple créées par des motifs imprimés sur l'objet en question ou encore des sillons sur sa surface, comme des sillons d'une peau, l'image simulée peut être considérée comme une approximation à une certaine échelle de l'image qui serait prise par l'imageur pour un objet qui aurait les mêmes caractéristiques 3D à l'échelle de la simulation et qui serait formé d'un matériau homogène correspondant aux propriétés du modèle de réflexion retenu. La correction, objet de la présente invention, est alors une correction de l'uniformité de l'image de l'objet, vis-à-vis de sa pose, et des caractéristiques du système d'éclairage et du système de prise de vues.

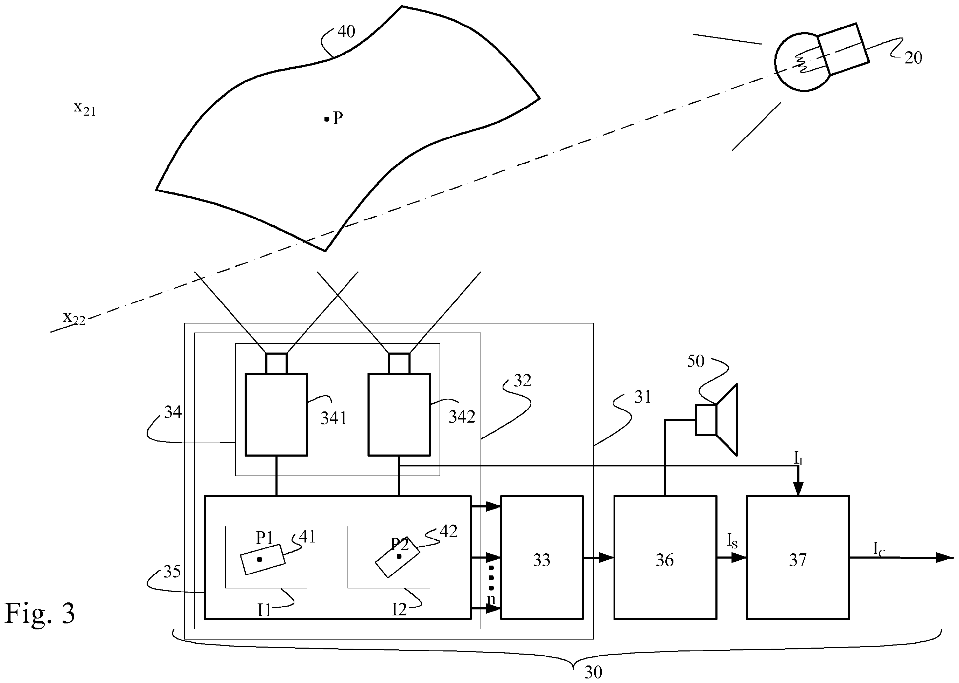

On a représenté à la Fig. 3, un autre mode de réalisation d'un système de prise de vues de l'invention selon lequel l'imageur 10 qui assure la prise de vues est remplacé par une des deux caméras 341 ou 342 (en l'occurrence, la caméra 342 qui a une sortie pour les signaux d'image de l'image I$_l$ prise au temps T0 de prise de vues).

De même, chaque caméra 341 et 342 peut être utilisée en tant qu'imageur 10, le procédé de la présente invention consistant à corriger les images réellement prises par chaque imageur 10.

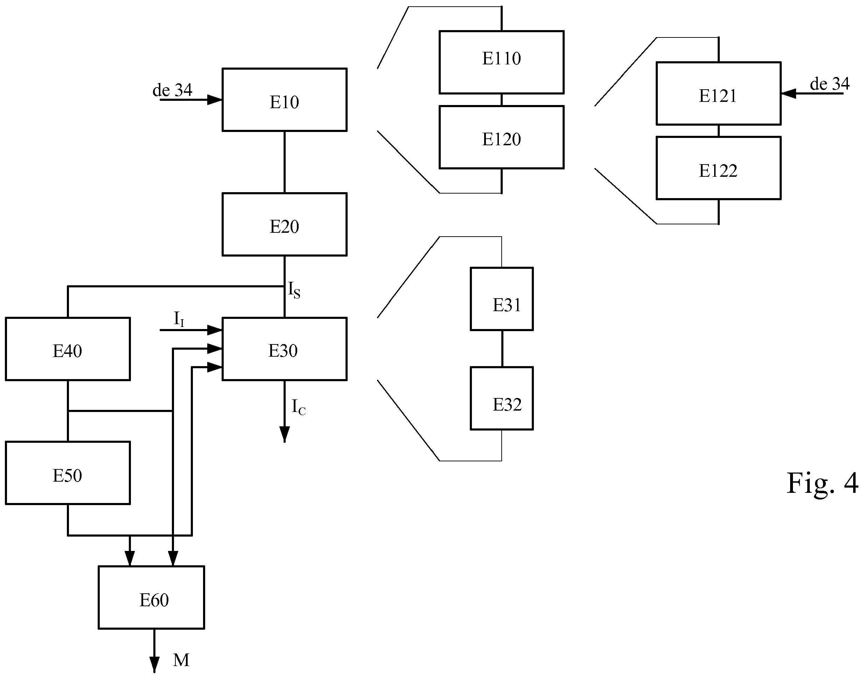

A la Fig. 4, on a représenté un diagramme illustrant un procédé de prise de vues selon l'invention qui est avantageusement mis en oeuvre au moyen d'un système de prise de vues, tel que celui représenté à la Fig. 1 ou celui représenté à la Fig. 3.

L'étape E10 est une étape d'estimation d'un modèle 3D de l'objet tel qu'il se trouve au temps T0 de la prise de l'image par ledit imageur 10. Plus précisément, l'étape E10 comporte une étape de détection E110 d'un objet dans la scène et une étape E120 qui est l'étape d'estimation d'un modèle 3D de l'objet à proprement parler. L'étape E120 comporte elle-même une étape E121 de prise de vues par un système de prise de vues 3D, tel que le système 34 et une étape E122 de détermination du modèle 3D de l'objet qui a été pris à l'étape E121 par ledit système de prise de vues 3D.

L'étape E20 est une étape de simulation d'image de l'objet 40 au temps T0 de prise de vues par l'imageur 10, sur la base du modèle 3D estimé à l'étape E10, d'un modèle de l'éclairage de l'objet incluant des paramètres intrinsèques et extrinsèques du système d'éclairage 20, d'un modèle de réflexion de l'objet ou de chaque partie de l'objet susceptible d'être pris par l'imageur 10 et d'un modèle de l'imageur 10. Cette étape E20 a pour résultat une image simulée $I_S$. Cette image est une image numérique qui est caractérisée par un ensemble de pixels à chacun desquels est affectée une valeur numérique relative à l'intensité lumineuse de ce pixel. Dans un mode de réalisation de l'invention, seules une ou plusieurs zones d'intérêt de l'objet 40 sont traitées lors de l'étape de simulation E20.

L'étape E30 est une étape de correction de l'image $I_I$ ou d'une zone d'intérêt de ladite image $I_I$ prise par ledit imageur 10 à l'issue de laquelle est obtenue une image corrigée $I_C$.

Cette étape 30 consiste à considérer un point de l'image $I_I$ prise par l'imageur 10. Peuvent n'être considérés que les points de l'image prise par l'image 10 qui sont à l'intérieur d'une ou plusieurs zones d'intérêt. Cette étape de correction E30 consiste à modifier l'intensité lumineuse de chaque point de l'image $I_I$ ou d'au moins une zone d'intérêt de l'image $I_I$ réellement prise par l'imageur 10 en fonction de l'intensité lumineuse du point correspondant dans l'image simulée $I_S$ ou des intensités lumineuses respectives de points voisins dudit point correspondant dans l'image simulée $I_S$. Par exemple, elle consiste encore à corriger l'image prise $I_I$ par l'imageur 10 et, plus exactement, à d'autant plus augmenter l'intensité lumineuse de chaque point de l'image $I_I$ ou d'au moins une zone d'intérêt de l'image $I_I$ réellement prise par l'imageur 10 que l'intensité lumineuse du point correspondant dans l'image simulée $I_S$ a son intensité lumineuse qui est faible et/ou à d'autant plus diminuer l'intensité lumineuse de chaque point de l'image $I_I$ ou d'au moins une zone d'intérêt de l'image $I_I$ réellement prise par l'imageur 10 que l'intensité lumineuse du point correspondant dans l'image simulée $I_S$ a son intensité lumineuse qui est forte.

Plus précisément, l'étape de correction E30 inclut une étape de calcul E31 pour calculer, pour chaque point de l'image ou d'au moins une zone de l'image prise par ledit imageur, un facteur de correction fonction décroissante de l'intensité lumineuse du point correspondant dans l'image simulée dudit objet ou des intensités lumineuses respectives de points voisins dudit point correspondant dans l'image simulée $I_S$ et une étape de traitement E32 pour modifier l'intensité lumineuse du point de l'image $I_I$ ou d'au moins une zone de l'image réellement prise par ledit imageur 10 en proportion dudit rapport.

Dans un mode de réalisation particulier, ledit procédé comporte encore une étape E40 de détermination des points de l'image simulée pour lesquels l'intensité lumineuse est supérieure à un seuil maximum et une étape E50 de détermination des points de l'image simulée pour lesquels l'intensité lumineuse est inférieure à un seuil minimum. Selon ce mode de réalisation particulier, ladite étape de correction E30 n'est pas mise en oeuvre pour les points de l'image prise par l'imageur correspondant aux points de l'image simulée ainsi déterminée aux étapes E40 et E50.

Dans un autre mode de réalisation, ledit procédé inclut encore une étape E60 de création d'un masque M correspondant aux points ainsi déterminés aux étapes E40 et E50 pour que des traitements d'image ultérieurs de l'image corrigée ne prennent pas en compte les points correspondants de ladite image corrigée.

Ce procédé est mis en oeuvre par une unité de traitement telle que l'unité de traitement 30 des Figs. 1 et 3.

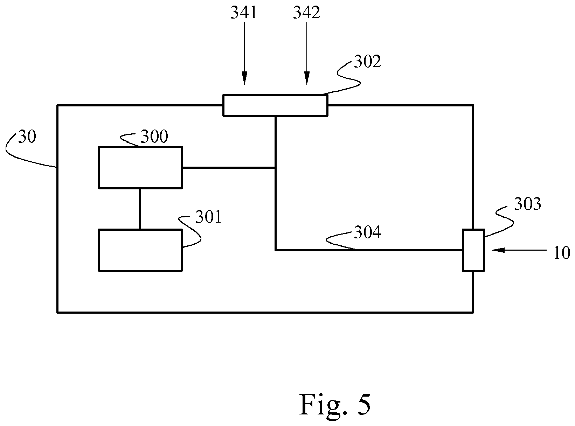

Avantageusement, les unités 33, 35 à 37 de cette unité de traitement 30 sont mises en oeuvre au moyen d'un système informatique tel que celui qui est schématisé à la Fig. 5.

Ce système informatique comprend une unité centrale 300 associée à une mémoire 301 dans laquelle sont mémorisés, d'une part, le code des instructions d'un programme exécuté par l'unité centrale 300 et, d'autre part, des données servant à l'exécution dudit programme. Il comporte encore un port 302 pour l'interfaçage avec le système de prise de vues 3D, par exemple avec les caméras 341 et 342 des Figs. 1 et 3 et un port 303 pour l'interfaçage avec l'imageur 10. L'unité centrale 300 et les ports 302 et 303 sont reliés entre eux au moyen d'un bus 304.

L'unité centrale 300 est capable d'exécuter des instructions chargées dans la mémoire 301, à partir, par exemple, de moyens de stockage, tels qu'une mémoire externe, une carte mémoire, CD, DVD, un serveur d'un réseau de communication, etc. Ces instructions forment un programme d'ordinateur causant la mise en oeuvre, par l'unité centrale 300, de tout ou partie des étapes du procédé de l'invention qui a été décrit en relation avec la Fig. 4.

Ainsi, tout ou partie de ces étapes peut être implémenté sous forme logicielle par exécution d'un ensemble d'instructions par une machine programmable, telle qu'un DSP (« Digital Signal Processor » en anglais) ou un microcontrôleur. Tout ou partie de ces étapes peut aussi être implémenté sous forme matérielle par une machine ou un composant dédié, tel qu'un FPGA (« Field-Programmable Gâte Array » en anglais) ou un ASIC (« Application-Specific Integrated Circuit » en anglais).

## Revendications

**1.** Procédé de correction d'une image d'un objet présenté à distance prise par un imageur, ledit objet étant éclairé au moyen d'un système d'éclairage, **caractérisé en ce qu'**il comporte les étapes suivantes :

- une étape (E10) d'estimation à partir d'au moins une image prise par un système de prise de vues 3D d'un modèle 3D de l'objet tel qu'il se trouve au moment de la prise de l'image par ledit imageur ;

- une étape (E20) de simulation d'image consistant à calculer l'intensité lumineuse de chaque point d'une image simulée telle qu'elle serait prise par l'imageur à partir dudit modèle 3D de l'objet tel qu'il se trouve au moment de la prise par ledit imageur ainsi estimé, et de modèles prédéterminés comprenant un modèle de l'éclairage de l'objet par ledit système d'éclairage, un modèle de réflexion sur la surface d'un objet et un modèle dudit imageur, afin d'obtenir une image simulée dudit objet ; et,

- une étape (E30) de correction de l'image prise par ledit imageur consistant à modifier l'intensité lumineuse de chaque point de l'image réellement prise par l'imageur ou d'au moins une zone d'intérêt de l'image réellement prise par l'imageur en fonction de l'intensité lumineuse du point correspondant dans l'image simulée ou des intensités lumineuses respectives de points voisins dudit point correspondant dans l'image simulée ; ladite étape de correction incluant :

- une étape (E31) de calcul pour calculer, pour chaque point de l'image ou d'au moins une zone de l'image prise par ledit imageur, un facteur de correction fonction décroissante de l'intensité lumineuse du point correspondant dans l'image simulée dudit objet ; et,

- une étape (E32) de traitement pour modifier l'intensité lumineuse de chaque point de l'image ou d'au moins une zone de l'image réellement prise par ledit imageur en proportion dudit facteur de correction ; et le procédé incluant en outre

- une première étape (E40) de détermination des points de l'image simulée pour lesquels l'intensité lumineuse est supérieure à un seuil maximum ;

- une deuxième étape (E50) de détermination des points de l'image simulée pour lesquels l'intensité lumineuse est inférieure à un seuil minimum ;

ladite étape de correction (E30) n'étant pas mise en oeuvre pour les points de l'image prise par l'imageur correspondant aux points de l'image simulée ainsi déterminés à la première étape de détermination (E40) ainsi qu'à la deuxième étape de détermination (E50).

2. Procédé de correction d'une image selon la revendication 1, **caractérisé en ce qu'**il inclut encore :

- une étape (E60) de création d'un masque correspondant aux points ainsi déterminés aux première et deuxième étapes de détermination (E40 et E50) pour que des traitements d'image ultérieurs de l'image corrigée ne prennent pas en compte les points correspondants de ladite image corrigée.

3. Procédé de correction d'une image selon une des revendications précédentes, **caractérisé en ce que** ladite étape d'estimation dudit modèle 3D met en oeuvre une méthode stéréoscopique à partir de couples de vues prises par ledit système de prise de vues 3D, ledit système de prise de vues 3D étant constitué soit de deux caméras prenant respectivement les vues de chaque couple simultanément, soit une caméra prenant les vues de chaque couple à deux temps différents.

4. Procédé de correction d'une image selon la revendication 3, **caractérisé en ce que** l'une et/ou l'autre des deux caméras dudit système de prise de vues 3D constitue ledit imageur.

5. Système de prise d'une image d'un objet présenté à distance devant un imageur, ledit objet étant éclairé au moyen d'un système d'éclairage, **caractérisé en ce qu'**il comporte :

- des moyens d'estimation à partir d'au moins une image prise par un système de prise de vues 3D d'un modèle 3D de l'objet tel qu'il se trouve au moment de la prise de l'image par ledit imageur ;

- des moyens de simulation d'image consistant à calculer l'intensité lumineuse de chaque point d'une image simulée telle qu'elle serait prise par l'imageur à partir dudit modèle 3D estimé par lesdits moyens d'estimation, et de modèles prédéterminés comprenant un modèle de l'éclairage de l'objet par ledit système d'éclairage, un modèle de réflexion sur la surface d'un objet et un modèle dudit imageur, afin d'obtenir une image simulée dudit objet ;

- des moyens de correction de l'image prise par ledit imageur pour modifier l'intensité lumineuse de chaque point de l'image réellement prise par l'imageur ou d'au moins une zone d'intérêt de l'image réellement prise par l'imageur en fonction de l'intensité lumineuse du point correspondant dans l'image simulée ou des intensités lumineuses respectives de points voisins dudit point correspondant dans l'image simulée ;

- des moyens de calcul pour calculer, pour chaque point de l'image ou d'au moins une zone de l'image prise par ledit imageur, un facteur de correction fonction décroissante de l'intensité lumineuse du point correspondant dans l'image simulée dudit objet ;
- des moyens de traitement pour modifier l'intensité lumineuse de chaque point de l'image ou d'au moins une zone de l'image réellement prise par ledit imageur en proportion dudit facteur de correction ;
- des moyens de détermination des points de l'image simulée pour lesquels l'intensité lumineuse est supérieure à un seuil maximum ; et
- des moyens de détermination des points de l'image simulée pour lesquels l'intensité lumineuse est inférieure à un seuil minimum ;

lesdits moyens de correction ne prenant pas en compte les points de l'image prise par l'imageur correspondant aux points de l'image simulée ainsi déterminée par lesdits moyens de détermination.

6. Système de prise de vues selon la revendication 5, **caractérisé en ce qu'**il comprend encore :

- des moyens de création d'un masque correspondant aux points ainsi déterminés par lesdits moyens de détermination, ledit masque étant prévu pour que des traitements d'image ultérieurs de l'image corrigée ne prennent pas en compte les points correspondants de ladite image corrigée.

7. Programme d'ordinateur, **caractérisé en ce qu'**il comprend des instructions pour mettre en oeuvre, par une unité centrale (300) d'un système de prise de vues selon une des revendications 5 à 6, un procédé selon l'une quelconque des revendications 1 à 4, lorsque ledit programme est exécuté par ledit processeur.

8. Moyens de stockage, **caractérisés en ce qu'**ils stockent un programme d'ordinateur comprenant des instructions pour mettre en oeuvre, par un processeur d'un système de prise de vue selon une des revendications 5 à 6, un procédé selon l'une quelconque des revendications 1 à 4, lorsque ledit programme est exécuté par ledit processeur.

**Patentansprüche**

1. Verfahren zur Korrektur eines Bilds eines von einem Bildgeber aufgenommenen, in Abstand präsentierten Objekts, wobei das Objekt mittels eines Beleuchtungssystems beleuchtet wird, **dadurch gekennzeichnet, dass** es die folgenden Schritte aufweist:

- einen Schritt (E10) der Schätzung, ausgehend von mindestens einem von einem 3D-Bildaufnahmesystem aufgenommenen Bild, eines 3D-Modells des Objekts, wie es sich zum Zeitpunkt der Bildaufnahme durch den Bildgeber befindet;
- einen Schritt (E20) der Bildsimulation, der darin besteht, die Lichtstärke jedes Punkts eines simulierten Bilds, wie es vom Bildgeber aufgenommen würde, ausgehend vom so geschätzten 3D-Modell des Objekts, wie es sich zum Zeitpunkt der Aufnahme durch den Bildgeber befindet, und von vorbestimmten Modellen zu berechnen, die ein Modell der Beleuchtung des Objekts durch das Beleuchtungssystem, ein Modell der Reflexion auf die Fläche eines Objekts und ein Modell des Bildgebers enthalten, um ein simuliertes Bild des Objekts zu erhalten; und
- einen Schritt (E30) der Korrektur des vom Bildgeber aufgenommenen Bilds, der darin besteht, die Lichtstärke jedes Punkts des tatsächlich vom Bildgeber aufgenommenen Bilds oder mindestens einer interessierenden Zone des tatsächlich vom Bildgeber aufgenommenen Bilds abhängig von der Lichtstärke des entsprechenden Punkts im simulierten Bild oder der jeweiligen Lichtstärken von dem entsprechenden Punkt benachbarten Punkten im simulierten Bild zu ändern; wobei der Korrekturschritt umfasst:
- einen Schritt (E31) der Berechnung, um für jeden Punkt des Bilds oder mindestens eine Zone des vom Bildgeber aufgenommenen Bilds einen Korrekturfaktor als abnehmende Funktion der Lichtstärke des entsprechenden Punkts im simulierten Bild des Objekts zu berechnen; und
- einen Schritt (E32) der Verarbeitung, um die Lichtstärke jedes Punkts des Bilds oder mindestens einer Zone des Bilds, das tatsächlich vom Bildgeber aufgenommen wurde, entsprechend dem Korrekturfaktor zu ändern;

und das Verfahren außerdem umfasst:

- einen ersten Schritt (E40) der Bestimmung der Punkte des simulierten Bilds, für die die Lichtstärke höher ist als eine maximale Schwelle;
- einen zweiten Schritt (E50) der Bestimmung der Punkte des simulierten Bilds, für die die Lichtstärke niedriger ist als eine minimale Schwelle;

wobei der Korrekturschritt (E30) nicht für die Punkte des vom Bildgeber aufgenommenen Bilds angewendet wird, die den im ersten Bestimmungsschritt (E40) sowie im zweiten Bestimmungsschritt (E50) so bestimmten Punkten des simulierten Bilds entsprechen.

2. Verfahren zur Korrektur eines Bilds nach Anspruch 1, **dadurch gekennzeichnet, dass** es weiter umfasst:

- einen Schritt (E60) der Erzeugung einer Maske, die den in den ersten und zweiten Bestimmungsschritten (E40 und E50) so bestimmten Punkten entspricht, damit spätere Bildverarbeitungen des korrigierten Bilds die entsprechenden Punkte des korrigierten Bilds nicht berücksichtigen.

3. Verfahren zur Korrektur eines Bilds nach einem der vorhergehenden Ansprüche, **dadurch gekennzeichnet, dass** der Schätzschritt des 3D-Modells eine stereoskopische Methode ausgehend von Paaren von Aufnahmen anwendet, die vom 3D-Bildaufnahmesystem aufgenommen wurden, wobei das 3D-Bildaufnahmesystem entweder aus zwei Kameras, die je die Aufnahmen jedes Paars gleichzeitig aufnehmen, oder aus einer Kamera besteht, die die Aufnahmen jedes Paars zu zwei verschiedenen Zeitpunkten aufnimmt.

4. Verfahren zur Korrektur eines Bilds nach Anspruch 3, **dadurch gekennzeichnet, dass** die eine und/oder die andere der zwei Kameras des 3D-Bildaufnahmesystems den Bildgeber bildet.

5. System zur Aufnahme eines Bilds eines in Abstand vor einem Bildgeber präsentierten Objekts, wobei das Objekt mittels eines Beleuchtungssystems beleuchtet wird, **dadurch gekennzeichnet, dass** es aufweist:

- Einrichtungen zur Schätzung, ausgehend von mindestens einem von einem 3D-Bildaufnahmesystem aufgenommenen Bild, eines 3D-Modells des Objekts, wie es sich zum Zeitpunkt der Bildaufnahme durch den Bildgeber befindet;
- Bildsimulationseinrichtungen, die darin bestehen, die Lichtstärke jedes Punkts eines simulierten Bilds, wie es vom Bildgeber aufgenommen würde, ausgehend von dem von den Schätzeinrichtungen geschätzten 3D-Modell und von vorbestimmten Modellen zu berechnen, die ein Modell der Beleuchtung des Objekts durch das Beleuchtungssystem, ein Modell der Reflexion auf der Oberfläche eines Objekts und ein Modell des Bildgebers enthalten, um ein simuliertes Bild des Objekts zu erhalten;
- Korrektureinrichtungen des vom Bildgeber aufgenommenen Bilds, um die Lichtstärke jedes Punkts des tatsächlich vom Bildgeber aufgenommenen Bilds oder zumindest einer interessierenden Zone des tatsächlich vom Bildgeber aufgenommenen Bilds abhängig von der Lichtstärke des entsprechenden Punkts im simulierten Bild oder den jeweiligen Lichtstärken von benachbarten Punkten des entsprechenden Punkts im simulierten Bild zu ändern;
- Recheneinrichtungen, um für jeden Punkt des Bilds oder mindestens einer interessierenden Zone des vom Bildgeber aufgenommenen Bilds einen Korrekturfaktor als abnehmende Funktion der Lichtstärke des entsprechenden Punkts im simulierten Bild des Objekts zu berechnen;
- Verarbeitungseinrichtungen, um die Lichtstärke jedes Punkts des Bilds oder mindestens einer Zone des Bilds, das tatsächlich vom Bildgeber aufgenommen wurde, entsprechend dem Korrekturfaktor zu ändern;
- Bestimmungseinrichtungen der Punkte des simulierten Bilds, für die die Lichtstärke höher ist als eine maximale Schwelle; und
- Bestimmungseinrichtungen der Punkte des simulierten Bilds, für die die Lichtstärke niedriger ist als eine minimale Schwelle;

wobei die Korrektureinrichtungen nicht die Punkte des vom Bildgeber aufgenommenen Bilds berücksichtigen, die den Punkten des durch die Bestimmungseinrichtungen so bestimmten simulierten Bilds entsprechen.

6. Bildaufnahmesystem nach Anspruch 5, **dadurch gekennzeichnet, dass** es weiter enthält:

- Einrichtungen zur Erzeugung einer Maske entsprechend den so von den Bestimmungseinrichtungen bestimmten Punkten, wobei die Maske vorgesehen ist, damit spätere Bildverarbeitungen des korrigierten Bilds nicht die entsprechenden Punkte des korrigierten Bilds berücksichtigen.

7. Computerprogramm, **dadurch gekennzeichnet, dass** es Anweisungen zur Durchführung, durch eine zentrale Einheit (300) eines Bildaufnahmesystems nach einem der Ansprüche 5 bis 6, eines Verfahrens nach einem der Ansprüche 1 bis 4 enthält, wenn das Programm vom Prozessor ausgeführt wird.

8. Speichereinrichtungen, **dadurch gekennzeichnet, dass** sie ein Computerprogramm speichern, das Anweisungen zur Durchführung, durch einen Prozessor eines Bildaufnahmesystems nach einem der Ansprüche 5 bis 6, eines Verfahrens nach einem der Ansprüche 1 bis 4 enthält, wenn das Programm von dem Prozessor ausgeführt wird.

**Claims**

1. Method for correcting an image of an object presented at a distance taken by an imaging device, said object being illuminated by means of a lighting system, **characterised in that** it comprises the following steps:

   - as step (E10) of estimating, from at least one image taken by a 3D image pickup apparatus, of a 3D model of the object as it is at the moment of photographing by said imaging device,
   - an image simulation step (E20) consisting of calculating the light intensity of each point of a simulated image as it would be taken by the imaging device, using said 3D model of the object as it is at the moment of the photographing by said imaging device thus estimated, and of predetermined models comprising a model of the illumination of the object illuminated by said lighting system, a model of reflection on the surface of an object and a model of said imaging device, in order to obtain a simulated image of said object, and
   - a step (E30) of correcting the image taken by said imaging device, consisting in modifying the light intensity of each point on the image actually taken by the imaging device or on at least one area of interest of the image actually taken by the imaging device according to the light intensity of the corresponding point in the simulated image or the respective light intensities of points adjacent to said corresponding point in the simulated image said correcting step including:
   - a calculation step (E31) for calculating, for each point of the image or of at least one area of the image taken by said imaging device, a correction factor that is a decreasing function of the light intensity of the corresponding point in the simulated image of said object, and,
   - a processing step (E32) for modifying the light intensity of each point of the image or of at least one area of the image actually taken by said imaging device in proportion to said correction factor; and the method further comprising.
   - a step first (E40) of determining points on the simulated image for which the light intensity is above a maximum threshold;
   - a second step (E50) of determining points on the simulated image for which the light intensity is below a minimum threshold;

   said correction step (E30) not being performed for the points on the image taken by the imaging device corresponding to the points on the simulated image thus determined at the first determination step (E40) and at the second determination step (E50).

2. Method for correcting an image according to claim 1, **characterised in that** it also includes:

   - a step (E60) of creating a mask corresponding to the points thus determined at the first and second determination steps (E40 and E50) so that subsequent image processings of the corrected image do not take into account the corresponding points on said corrected image.

3. Method for correcting an image according to one of the preceding claims, **characterised in that** said step of determining said 3D model uses a stereoscopic method involving pairs of views taken by said 3D image pickup system, said 3D image pickup system consisting either of two cameras taking respectively the views of each pair simultaneously, or a camera taking the views of each pair at two different times.

4. Method for correcting an image according to claim 3, **characterised in that** one or other or both of the two cameras of said 3D image pickup system constitutes said imaging device.

5. Image pickup system of an image taken by an imaging device of an object presented at a distance in front of said imaging device, said object being illuminated by means of a lighting system, **characterised in that** it comprises:

   - means for estimating from at least one image taken by a 3D image pickup system, a 3D model of the object as it is at the moment of the taking of the image by said imaging device,
   - image-simulation means consisting of calculating the light intensity of each point on a simulated image as it would be taken by the imaging device, using said 3D model estimated by said estimation means, a model of the illumination of the object by said lighting system, a model of reflection on the surface of an object and a model of said imaging device, in order to obtain a simulated image of said object, and

- means for correcting the image taken by said imaging device in order to modify the light intensity of each point on the image actually taken by the imaging device or on at least one area of interest of the image actually taken by the imaging device, according to the light intensity of the corresponding point in the simulated image or the respective light intensities of points adjacent to said corresponding point in the simulated image;

- means for calculating, for each point of the image or of at least one area of the image taken by said imaging device, a correction factor that is a decreasing function of the light intensity of the corresponding point in the simulated image of said object, and,

- processing means for modifying the light intensity of each point of the image or of at least one area of the image actually taken by said imaging device in proportion to said correction factor; and the method further comprising.

- means for determining points on the simulated image for which the light intensity is above a maximum threshold;
- means for determining points on the simulated image for which the light intensity is below a minimum threshold;

said correction means not being performed for the points on the image taken by the imaging device corresponding to the points on the simulated image thus determined at the first determination step (E40) and at the second determination step (E50).

6. Image pickup system according to claim 9, **characterised in that** it also comprises:
   means for creating a mask corresponding to the points thus determined by said determination means, said mask being designed so that processings of images subsequent to the corrected image do not take into account the corresponding points on said corrected image.

7. Computer program, **characterised in that** it comprises instructions for the implementation, by a central unit (300) of an image pickup system according to one of claims 5 to 6, of a method according to any one of claims 1 to 4, when said program is executed by said processor.

8. Storage means, **characterised in that** they store a computer program comprising instructions for the implementation, by a processor of an image pickup system according to one of claims 5 to 6, of a method according to any one of claims 1 to 4, when said program is executed by said processor.

Fig. 1

Fig. 2

Fig. 3

Fig. 4

Fig. 5

**EP 3 073 441 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2002015311 B

- US 2011182520 A

**Littérature non-brevet citée dans la description**

- **DAVID G. LOWE.** Object récognition form local scale-invariant features. *Proceedings of the International Conference on Computer Viston,* 1999, vol. 2, 1150-1157

- **HERBERT BAY ; TINNE TUYTELAARS ; LUC VAN GOOL.** SURF: Speeded Up Robust Features. *9th European Conference on Computer Vision,* 07 Mai 2006
- **HARTLEY ; RICHARD ; ANDREW ZISSERMAN.** *Multiple View Geometry In Computer Vision,* 2000